# EUROPÄISCHE PATENTSCHRIFT

(11) **EP 4 370 873 B1**
(45) Veröffentlichungstag und Bekanntmachung des Hinweises auf die Patenterteilung: **10.12.2025**
(21) Anmeldenummer: 22737557.3
(22) Anmeldetag: 08.06.2022
(51) Int. Cl.: G01C 21/34, G01C 21/36

(54) **VERFAHREN ZUR PROJEKTION WENIGSTENS EINES LICHTMUSTERS IN EINE FAHRZEUGUMGEBUNG UND FAHRZEUG MIT WENIGSTENS EINEM PROJEKTOR**
METHOD FOR PROJECTING AT LEAST ONE LIGHT PATTERN INTO THE SURROUNDINGS OF A VEHICLE AND VEHICLE HAVING AT LEAST ONE PROJECTOR
PROCÉDÉ DE PROJECTION D'AU MOINS UN MOTIF LUMINEUX DANS L'ENVIRONNEMENT D'UN VÉHICULE ET VÉHICULE ÉQUIPÉ D'AU MOINS UN PROJECTEUR

(30) Priorität: 12.07.2021 DE 102021003558
(43) Veröffentlichungstag der Anmeldung: 22.05.2024
(73) Patentinhaber: Mercedes-Benz Group AG, 70372 Stuttgart (DE)
(72) Erfinder: WEBER, Hanno, 73230 Kirchheim/Teck (DE)
(74) Vertreter: Novagraaf Group
(86) Internationale Anmeldenummer: PCT/EP2022/065539
(87) Internationale Veröffentlichungsnummer: WO 2023/285037

(56) Entgegenhaltungen:
- CN-A- 110 260 878
- DE-A1- 102013 012 891
- DE-A1- 102017 210 801
- US-A1- 2008 198 372
- US-A1- 2021 140 781

## Beschreibung

Die Erfindung betrifft ein Verfahren zur Projektion wenigstens eines Lichtmusters in eine Fahrzeugumgebung mit wenigstens einem von einem Fahrzeug umfassten Projektor nach der im Oberbegriff von Anspruch 1 näher definierten Art, sowie ein Fahrzeug nach der im Oberbegriff von Anspruch 6 näher definierten Art.

Mit Hilfe von modernen Navigationssystemen können sich heutzutage Personen komfortabel und einfach orientieren. So ist eine Person unter Anwendung einer Routenführung dazu in der Lage mit einem Fahrzeug zuverlässig und ohne das Erfordernis selbst manuell eine entsprechende Fahrtroute, beispielsweise mit Hilfe einer Straßenkarte, planen zu müssen, einen fremden Ort aufzusuchen. Zudem muss sich die Person eine entsprechende Fahrtroute nicht merken. Entsprechende Navigationssysteme können fest in ein Fahrzeug integriert sein oder auch als mobiles Endgerät ausgeführt sein.

Oftmals endet eine Fahrt mit dem Fahrzeug jedoch nicht in einer unmittelbaren Umgebung zum Zielort, sondern in einiger Entfernung zu diesem. Eine mögliche Ursache ist ein Mangel an freien Parkplätzen im Bereich des Zielorts. Somit muss eine fahrzeugführende Person, insbesondere in Städten mit einer schlechten Parkplatzsituation, einen freien Parkplatz vor Erreichen des Zielorts nutzen, oder am Zielort vorbeifahren und hinter dem Zielort nach einem freien Parkplatz suchen.

Hat die fahrzeugführende Person dann einen geeigneten Parkplatz gefunden und steigt aus dem Fahrzeug aus um zu Fuß zum Zielort zu gelangen, so muss sich die fahrzeugführende Person erneut orientieren, um vom Abstellort des Fahrzeugs zum Zielort zu finden. Je länger sie nach einem freien Parkplatz suchen musste und je weiter dieser vom eigentlichen Zielort entfernt ist, desto komplizierter ist auch die Wegfindung der sich an die Fahrt anschließenden Navigation zu Fuß.

Insbesondere bei Nutzung eines fahrzeugintegrierten Navigationsgeräts stehen nach Verlassen des Fahrzeugs keine Navigationshinweise mehr zur Verfügung, was das Auffinden des schnellsten Wegs zum Zielort erschwert. Zur Navigationsfortführung kann dann die fahrzeugführende Person ihr Smartphone benutzen. Jedoch muss die fahrzeugführende Person dann erneut das Ziel in das Smartphone einprogrammieren, was mit einem erhöhten Zeitaufwand verbunden ist. Ist die fahrzeugführende Person in einer zeitkritischen Situation wie beispielsweise auf dem Weg zu einem Termin, so geht hierdurch wertvolle Zeit verloren.

Aus dem allgemeinen Stand der Technik sind Verfahren und Vorrichtungen zum projizieren von Lichtmustern in eine Fahrzeugumgebung bekannt. So offenbart die DE 10 2018 120 330 A1 ein Verfahren zur Bildprojektion bei Fahrzeugen. Dabei projiziert ein Fahrzeug mit entsprechenden Projektoren in Abhängigen einer Trajektorie des Fahrzeugs Symbole in die Fahrzeugumgebung. Ein solches Symbol kann beispielsweise einen Hinweis umfassen, ob das Fahrzeug autonom oder manuell gesteuert wird. Auch kann das Symbol Umgebungsmerkmale wie ein aktuelles Signal einer Lichtzeichenanlage umfassen, um beispielsweise eine nach unten auf ihr Smartphone blickende Person daraufhin zu weisen, dass sie rot hat und dass das Lichtmuster projizierende Fahrzeug vor der auf das Smartphone blickende Person abbiegt. Die vom Fahrzeug in die Umgebung projizierten Symbole werden dabei entsprechend der Zielobjekte für die sie gelten orientiert.

Ferner ist aus der DE 10 2018 000 275 A1 ein Assistenzsystem für ein Fahrzeug bekannt. Das Assistenzsystem ermöglicht das Ansteuern von Fahrzeugscheinwerfern zum Anleuchten eines Navigationsziels, um es einer fahrzeugführenden Person zu erleichtern das Zielobjekt ihrer Routenführung besonders einfach auffinden zu können. Somit muss die fahrzeugführende Person nicht erst beispielsweise die Hausnummern unterschiedlicher Gebäude überprüfen, um ihren Zielort zu finden. Das Anleuchten des Navigationsziels erfordert es jedoch, dass sich das Fahrzeug in Sichtweite zum Zielort, beziehungsweise zum Zielobjekt befindet.

Zudem offenbart die DE 10 2017 210 801 A1 ein Projektionsorientierungs-Korrektursystem für ein eine Projektionsvorrichtung verwendendes Fahrzeug. Das Fahrzeug kann dabei mittels der Projektionsvorrichtung ein Bild einer Route vom Aufenthaltsort des Fahrzeugs zu einem einprogrammierten Zielort in die Umgebung werfen. Das Bild wird dabei gezielt gegenüber der Umgebung ausgerichtet.

Das Projizieren von Navigationshinweisen in die Umgebung durch ein Fahrzeug ist auch offenbart durch die US 2021/140781 A1, die CN 110 260 878 A sowie die DE 10 2013 012 891 A1. Die DE 10 2013 012 891 A1 zeigt dabei die Verwendung eines in einen Außenspiegel des Fahrzeugs eingebauten Projektors.

Ferner offenbart die US 2008/198372 A1 die Projektion von Lichtmustern in die Umgebung eines Fahrzeugs mit Hilfe eines Scheinwerfers des Fahrzeugs.

Der vorliegenden Erfindung liegt die Aufgabe zugrunde, ein verbessertes Verfahren zur Projektion wenigstens eines Lichtmusters in eine Fahrzeugumgebung mit wenigstens einem von einem Fahrzeug umfassten Projektor anzugeben, mit dessen Hilfe eine fahrzeugführende Person nach Abstellen ihres Fahrzeugs besonders zuverlässig und komfortabel zu einem Navigationsziel geführt wird.

Erfindungsgemäß wird diese Aufgabe durch ein Verfahren zur Projektion wenigstens eines Lichtmusters in eine Fahrzeugumgebung mit wenigstens einem von einem Fahrzeug umfassten Projektor mit den Merkmalen des Anspruchs 1, sowie ein Fahrzeug mit den Merkmalen des Anspruchs 6 gelöst. Vorteilhafte Ausgestaltungen und Weiterbildungen ergeben sich aus den hiervon abhängigen Ansprüchen.

Bei einem Verfahren zur Projektion wenigstens eines Lichtmusters in eine Fahrzeugumgebung mit wenigstens einem von einem Fahrzeug umfassten Projektor umfasst das Lichtmuster einen Navigationshinweis zur Navigationsfortführung in Form eines zum Erreichen eines Navigationsziels zu wählendem Weg, um eine fahrzeugführende Person nach Abstellen des Fahrzeugs in Richtung des Navigationsziels zu weisen. Dabei wird das Lichtmuster gezielt gegenüber der Fahrzeugumgebung ausgerichtet, sodass das Lichtmuster mit einer festgelegten Orientierung in die Fahrzeugumgebung projiziert wird. Erfindungsgemäß wird bei Verwendung wenigstens eines in einen Außenspiegel integrierten Projektors zur Projektion des Lichtmusters, ein Türöffnungswinkel einer Fahrzeugtür, an die der Außenspiegel angeschlossen ist, bei der gezielten Ausrichtung des Lichtmusters gegenüber der Fahrzeugumgebung berücksichtigt.

Mit Hilfe des erfindungsgemäßen Verfahrens wird es der Person besonders komfortabel ermöglicht zuverlässig das Navigationsziel einer während der Nutzung des Fahrzeugs durchgeführten Navigation auch nach Abstellen des Fahrzeugs zu erreichen. So ist die Person dank des Navigationshinweises dazu in der Lage schnell und einfach den geeignetsten Weg, um zu Fuß zum Navigationsziel zu gelangen, zu wählen. Geeignet bedeutet dabei, dass der zu Fuß zu gehende Weg beispielsweise eine besonders kurze Weglänge aufweist und/oder zeitlich besonders schnell zurückgelegt werden kann. Dabei ist es unerheblich, ob sich das Fahrzeug in Sichtweite zum Zielobjekt befindet. Dies ermöglicht eine zuverlässige Wegfindung für die Person, auch wenn sie ihr Fahrzeug an einem Parkplatz vor Erreichen des Navigationsziels, in Sichtweite des Navigationsziels oder auch nach Passieren des Navigationsziels abstellt. Zudem muss die Person zur Wegfindung nun nicht mehr ihr Smartphone oder ähnliches mobile Endgerät benutzen, wodurch sie Zeit spart.

Durch das gezielte Ausrichten des Lichtmusters gegenüber der Fahrzeugumgebung wird eine Orientierung für die Person verbessert. So lässt sich beispielsweise bei einem Lichtmuster in Form einer Karte, die Karte so zur Umgebung ausrichten, dass die Himmelsrichtungen der Karte mit den tatsächlichen Himmelsrichtungen übereinstimmen. Somit entsprechen auch die von der Karte umfassten Bestandteile wie Straßen einer tatsächlichen Orientierung.

Würde der Türöffnungswinkel unberücksichtigt bleiben, so ändert sich die Ausrichtung des Lichtmusters beim Öffnen und Schließen der Fahrzeugtür gegenüber der Umgebung. Somit könnte die Person den zu wählenden Weg nicht mehr intuitiv auffassen. Indem der Türöffnungswinkel der Fahrzeugtür jedoch ausgeglichen wird, wird das Lichtmuster entsprechend der festgelegten Orientierung in die Fahrzeugumgebung projiziert, auch wenn die Tür offen ist, geschlossen ist oder bewegt wird.

Eine vorteilhafte Weiterbildung des Verfahrens sieht vor, dass mit dem Lichtmuster Text, wenigstens ein Symbol und/oder wenigstens eine Karte in die Fahrzeugumgebung projiziert wird. Mit Hilfe von Text, Symbolen und/oder einer Karte lässt sich der zum Erreichen des Navigationsziels zu wählende Weg besonders intuitiv und damit leicht verständlich von der Person erfassen. Beispielsweise können Hinweise in Textform ausgegeben werden, wie beispielsweise Richtungsangaben wie "links", "geradeaus", "um die Ecke", Entfernungsangaben wie "in 100 Metern" oder dergleichen, oder auch Hinweise wie "Start", "Ziel", "Kreuzung überqueren", Straßennamen, Hausnummern oder dergleichen.

Als Symbol können richtungsweisende Symbole wie Pfeile dargestellt werden, oder auch Piktogramme, beispielsweise im Form eines Hauses, einer Fabrik, einer Straße, eines Zielmarkers, eines Startmarkers, einer Zielfahne oder dergleichen.

Besonders bevorzugt wird eine Karte in die Fahrzeugumgebung projiziert. Mit Hilfe einer Karte kann die Person besonders schnell erfassen, welchen Weg sie nehmen muss, um an das Navigationsziel zu gelangen. Dabei kann die Karte beliebig stark abstrahiert sein. Die Karte kann entweder detailliert ausgeführt sein und sämtliche relevanten Straßen, Gebäude nebst Straßennamen und Hausnummern umfassen, oder die Karte kann lediglich den von der Person zu wählenden Weg umfassen. Insbesondere ist die Karte auf eine möglichst kleinen Kartenausschnitt begrenzt, an dessen Rändern das (abgestellte) Fahrzeug und das Navigationsziel liegen. Somit wird die Darstellung irrelevanter Informationen vermieden, was ein intuitives Erfassen des zu wählenden Wegs für die Person vereinfacht.

Entsprechend einer weiteren vorteilhaften Ausgestaltung des Verfahrens wird das Lichtmuster auf einen Untergrund projiziert. Durch das Projizieren des Lichtmusters auf einen Untergrund wie dem Boden auf dem das Fahrzeug abgestellt ist, wird sichergestellt, dass das Lichtmuster zu verschiedenen Situationen auch in die Fahrzeugumgebung geworfen werden kann. Stehen keine vertikalen Projektionsflächen wie Häuserwände zur Verfügung, und/oder wird das Fahrzeug in einer Parklücke abgestellt, sodass unmittelbar vor und hinter dem Fahrzeug weitere Fahrzeuge stehen, so ist dennoch eine störungsfreie Projektion des Lichtmusters auf den Untergrund möglich. Der Untergrund kann dabei eine beliebige Struktur aufweisen. Beispielsweise kann es sich um Asphalt, Bordsteine, Kies oder dergleichen handeln. Zudem bewegt sich auch die Person auf dem Untergrund fort, wodurch sie sich besonders leicht beispielsweise bei einem Lichtmuster mit einer Karte in die Karte hineinversetzen kann.

Eine weitere vorteilhafte Ausgestaltung des Verfahrens sieht ferner vor, dass zumindest ein Teil eines Lichtmusters animiert wird. Beispielsweise können einzelne Lichtmustersegmente wie Textbausteine, einzelne Symbole und/oder Kartenabschnitte blinken, sich bewegen, oder eine beliebige Dynamik ändern wie eine Helligkeit, einen Kontrast und/oder ihre Farbe. Auch können einzelne Teile des Lichtmusters ihre Größe verändern. Beispielsweise kann eine Karte der näheren Fahrzeugumgebung in die Fahrzeugumgebung projiziert werden, der von der Person zum Navigationsziel reichende Weg heller hervorgehoben sein und auf diesem Weg sich ein besonders hell leuchtender und/oder blinkender Pfeil entlang des Weges fortbewegen. Auch können potentielle Gefahrenstellen hervorgehoben werden, wie beispielsweise eine Stelle an der die Person eine Straße überqueren muss, beispielsweise an einer Ampel oder an einem Fußgängerüberweg. Dabei kann ein entsprechender Bereich der Karte beispielsweise rot blinken.

Mit Hilfe von in die Außenspiegel des Fahrzeugs integrierten Projektoren lässt sich auch bei anspruchsvollen Parksituationen ein wahrnehmbares Lichtmuster in die Fahrzeugumgebung werfen. Dabei können die Projektoren an einer beliebigen Stelle in einem entsprechenden Außenspiegel integriert sein. Beispielsweise können die Projektoren an einer Unterseite eines Außenspiegels in diesen integriert sein und in Richtung eines Untergrunds ausgerichtet sein.

Zum Projizieren des Lichtmusters können verschiedene Technologien verwendet werden. Beispielsweise können die Fahrzeugscheinwerfer und/oder die Projektoren Laser oder sonstige Leuchtmittel wie LEDs, Leuchtstoffröhren, Halogenlampen oder dergleichen umfassen. Neben wenigstens einem Leuchtmittel umfasst ein entsprechender Projektor typischerweise weitere Bauelemente wie Spiegel, Linsen, Filter, Aktoren und dergleichen.

Bevorzugt wird der Türöffnungswinkel mittels eines Winkelsensors und/oder durch Auswertung von mit einer in den Außenspiegel integrierten Kamera erzeugten Kamerabildern erfasst. Zur Ausbildung des Winkelsensors können verschiedene Technologien zum Einsatz kommen, wie die Verwendung von Magneten und/oder Potentiometern. Ein entsprechender Winkelsensor kann an einer beliebigen Stelle zwischen Fahrzeug und Fahrzeugtür an diesen angeschlossen sein. Durch das Vorsehen von Kameras kann jedoch auf die Verwendung beweglicher Teile beziehungsweise Sensoren verzichtet werden, was eine zuverlässige Erfassung eines Türöffnungswinkels ermöglicht. So können beispielsweise Winkelsensoren unter Verwendung eines Potentiometers über ihre Lebensdauer verschleißen, was eine fehlerhafte Winkelerfassung bedingt. Dies lässt sich durch die Verwendung von Kameras zur Erfassung eines Türöffnungswinkels vermeiden. Von entsprechenden Kameras erzeugte Kamerabilder können dabei auf einer beliebigen Recheneinheit im Fahrzeug ausgewertet werden.

Bei einem Fahrzeug mit wenigstens einem Projektor, einer Navigationseinrichtung und einer Recheneinheit sind erfindungsgemäß der Projektor, die Navigationseinrichtung und die Recheneinheit zur Durchführung eines im vorigen beschriebenen Verfahrens eingerichtet. Bei dem Fahrzeug kann es sich um ein beliebiges Fahrzeug wie einen PKW, LKW, Transporter, Bus oder dergleichen handeln. Mittels der Navigationseinrichtung wird eine Route berechnet, die eine Person mit dem Fahrzeug fährt, um von einem Startpunkt an ein Navigationsziel zu gelangen. Stellt die Person dann ihr Fahrzeug in einer gewissen Entfernung zum eigentlichen Navigationsziel ab, ist sie mit Hilfe des erfindungsgemäßen Verfahrens und des erfindungsgemäßen Fahrzeugs dazu in der Lage, schnell, einfach und intuitiv zu Fuß um Navigationsziel zu gelangen.

So erfasst die Navigationseinrichtung den Ort an dem das Fahrzeug abgestellt wird und zeigt mit Hilfe des in die Fahrzeugumgebung projizierten Navigationshinweises der Person an, welchen Weg sie noch zu Fuß zurücklegen muss, um das eigentliche Navigationsziel zu erreichen. Bei der Navigationseinrichtung kann es sich um ein fest in das Fahrzeug integriertes Navigationssystem handeln. Auch kann es sich um ein mobiles Endgerät wie ein Smartphone oder ein mobiles Navigationsgerät, meist als "Navi" bezeichnet, handeln. Zur Bestimmung einer Geoposition des Fahrzeugs beziehungsweise der Navigationseinrichtung kann ein globales Navigationssatellitensystem wie GPS, Beidou, Galileo oder dergleichen verwendet werden. Die Recheneinheit kann in die Navigationseinrichtung, den Projektor oder auch in das Fahrzeug integriert sein. Beispielsweise kann es sich bei der Recheneinheit um einen zentralen Bordcomputer, eine Telematikeinheit oder ein sonstiges Steuergerät eines Fahrzeuguntersystems handeln. Mit Hilfe der Recheneinheit oder auch einer separaten Recheneinheit werden Steuerungsbefehle zum Ansteuern des wenigstens einen Projektors erzeugt.

Weitere vorteilhafte Ausgestaltungen des erfindungsgemäßen Verfahrens und des Fahrzeugs ergeben sich auch aus dem Ausführungsbeispielen, welche nachfolgend unter Bezugnahme auf die Figuren näher beschrieben werden.

Dabei zeigen:
- Fig. 1: eine Draufsicht auf ein abgestelltes erfindungsgemäßes Fahrzeug, das einen Navigationshinweis zur Navigationsfortführung in eine Fahrzeugumgebung projiziert;
- Fig. 2: eine Detailansicht eines simplen Navigationshinweises; und
- Fig. 3: eine Detailansicht eines komplexen Navigationshinweises.

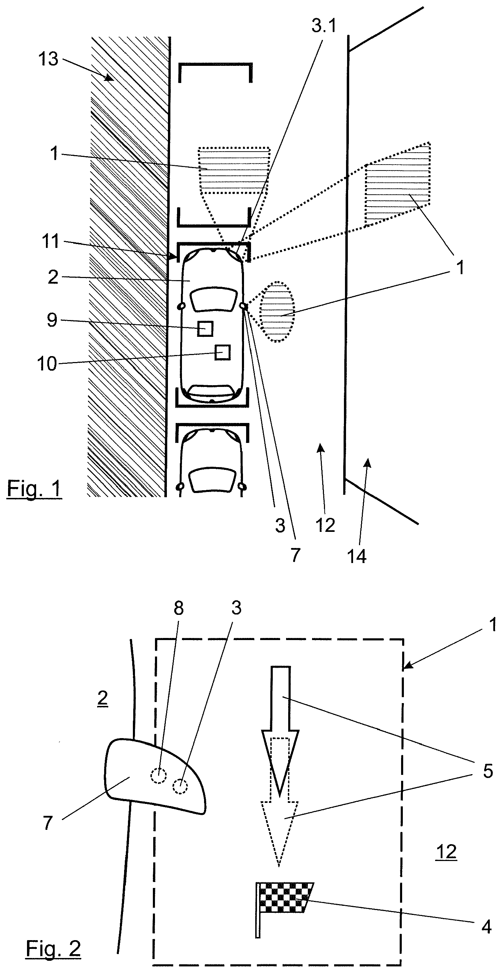

Figur 1 zeigt eine Draufsicht auf ein erfindungsgemäßes Fahrzeug 2, welches auf einem freien Parkplatz 11 abgestellt wurde. Dabei handelt es sich um einen Parkplatz 11 in einer Stadt. So befindet sich der Parkplatz 11 auf einem Bürgersteig 12 zwischen einer Straße 13 und einer Häuserwand 14.

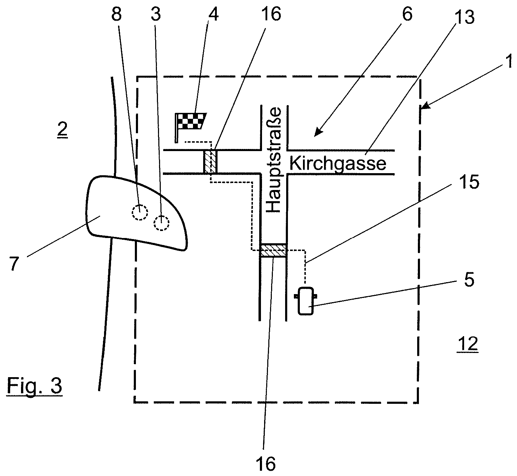

Eine fahrzeugführende Person des Fahrzeugs 2 reist mit dem Fahrzeug 2 von einem Startort zu einem Navigationsziel 4, welches symbolhaft in Figur 2 und 3 dargestellt ist. In einer unmittelbaren Nähe zum Navigationsziel 4 ist jedoch kein freier Parkplatz verfügbar, weshalb die fahrzeugführende Person ihr Fahrzeug 2 auf dem freien Parkplatz 11 abgestellt hat. Um zum Navigationsziel 4 zu gelangen, muss die Person nun jedoch eine restliche Wegstrecke zu Fuß zurücklegen. Je weiter der freie Parkplatz 11 zum Navigationsziel 4 entfernt ist, und je verwinkelter die Stadt, desto schwieriger ist die Wegfindung für die Person. Zudem muss sie sich nach Abstellen des Fahrzeugs 2 auf dem freien Parkplatz 11 erst einmal orientieren, um herauszufinden in welche Richtung das eigentliche Navigationsziel 4 nun liegt.

Um es der Person zu erleichtern das Navigationsziel 4 nach Abstellen des Fahrzeugs 2 zu erreichen, umfasst das erfindungsgemäße Fahrzeug 2 wenigstens einen Projektor 3 zum Projizieren von Navigationshinweisen in ein Fahrzeugumfeld, sowie eine Navigationseinrichtung 9 zur Routenfindung und eine Recheneinheit 10 zur Auswertung von Sensorsignalen, Routenberechnung und/oder Ansteuern des wenigstens einen Projektors 3. Die Recheneinheit 10 kann dabei auch in die Navigationseinrichtung 9 integriert sein.

Ein Projektor 3 ist in einen Außenspiegel 7 des Fahrzeugs 2 integriert oder kann gemäß einer nicht unter den Schutzumfang der Erfindung fallenden Ausführungsform von einem Scheinwerfer 3.1 des Fahrzeugs 2 ausgebildet sein. Mit Hilfe eines solchen Projektors wird ein Lichtmuster 1 in die Fahrzeugumgebung geworfen, wobei das Lichtmuster 1 den Navigationshinweis zur Navigationsfortführung umfasst. Der Navigationshinweis selbst umfasst einen zum Erreichen des Navigationsziels 4 von der Person zu wählenden Weg.

Das Lichtmuster 1 kann auf einen Untergrund vor, neben und/oder hinter das Fahrzeug geworfen werden. Es ist generell auch möglich, dass das Lichtmuster 1 auf vertikale Flächen wie die Häuserwand 14 geworfen wird. In dem Beispiel in Figur 1 wirft das Fahrzeug 2 lediglich mit seinem rechten Frontscheinwerfer 3.1 das Lichtmuster 1 vor sich. Es ist generell jedoch auch möglich, dass beide Fahrzeugscheinwerfer 3.1 zur Projektion des Lichtmusters 1 verwendet werden. Hierdurch lässt sich ein besonders großes Lichtmuster 1 erzeugen. Parkt jedoch vor dem Fahrzeug 2 ein weiteres, hier nicht dargestelltes Fahrzeug, so lässt sich für die Person kein wahrnehmbares Lichtmuster 1 in die Umgebung werfen. Mit Hilfe eines in einen Außenspiegel 7 integrierten Projektors 3 kann jedoch auch in einer solchen Situation die Wahrnehmbarkeit des Lichtmusters 1 für die Person sichergestellt werden. In Figur 1 wird lediglich mit einem in den rechten Außenspiegel 7 des Fahrzeugs 2 integrierten Projektor 3 ein Lichtmuster 1 erzeugt. Generell kann auch mit einem in den linken Außenspiegel 7 integrierten Projektor 3 ein solches Lichtmuster 1 erzeugt werden. In dem Beispiel in Figur 1 würde dieses jedoch auf die Straße 13 geworfen, was erfordern würde, dass die Person sich zur Betrachtung des entsprechenden Lichtmusters 1 (nicht dargestellt) im Bereich der Straße 13 hinstellen würde. Hierdurch würde sie einen laufenden Verkehr beeinflussen, oder sogar Gefahr laufen in einen Unfall verwickelt zu werden. Deshalb ist eine Projektion des Lichtmusters 1 in Richtung des Bürgersteigs 12, beziehungsweise der Häuserwand 14, zu bevorzugen. Generell kann das Fahrzeug 2 auch an weiteren Stellen Projektoren 3 aufweisen. Beispielsweise kann ein Projektor 3 auch in eine Stoßstange, eine Tür, eine Heckklappe oder dergleichen integriert sein.

Mit Hilfe des Lichtmusters 1 beziehungsweise des vom Lichtmuster 1 umfassten Navigationshinweises wird die Person in Richtung des ursprünglich mit dem Fahrzeug 2 zu erreichenden Navigationsziels 4 hingewiesen. Hierdurch kann die Person besonders einfach und schnell erfassen, in welche Richtung das Navigationsziel 4 liegt und sich zu Fuß in Richtung des Navigationsziels 4 bewegen.

Figur 2 zeigt eine Detailansicht eines Lichtmusters 1. Dargestellt sind ein Ausschnitt des Fahrzeugs 2 mit einem entsprechenden Außenspiegel 7. In dem Außenspiegel 7 ist der Projektor 3 beispielsweise an einer Unterseite integriert. Zusätzlich neben dem Projektor 3 umfasst der Außenspiegel 7 auch eine Kamera 8. Mit Hilfe der Kamera 8 wird ein Untergrund sowie ein Ausschnitt des Fahrzeugs 2 erfasst, wodurch durch eine Orientierung des Fahrzeugs 2 und des Untergrunds in von der Kamera 8 erzeugten Kamerabildern darauf geschlossen werden kann, mit welchem Türöffnungswinkel eine den Außenspiegel 7 umfassende Fahrzeugtür gerade geöffnet ist. Diese Information wird dazu verwendet eine Ausrichtung des Lichtmusters 1 gegenüber der Fahrzeugumgebung anzupassen. Hierdurch kann gewährleistet werden, dass das Lichtmuster 1 immer so in die Umgebung projiziert wird, dass der vom Lichtmuster 1 umfasste Navigationshinweis auch tatsächlich in Richtung des Navigationsziels 4 zeigt.

In Figur 2 umfasst das Lichtmuster 1 ein Symbol 5 in Form eines Pfeils. Der Pfeil zeigt in Richtung des Navigationsziels 4, woraufhin die Person schnell und einfach wahrnehmen kann, in welche Richtung sie sich zum Navigationsziel 4 fortbewegen muss. Das Navigationsziel 4 ist in den Figuren 2 und 3 durch eine Zielfahne symbolisiert.

Entsprechend einer vorteilhaften Ausgestaltung des erfindungsgemäßen Verfahrens kann das Lichtmuster 1, beziehungsweise ein Teil des Lichtmusters 1, auch animiert sein. Beispielsweise kann sich der in Figur 2 dargestellte Pfeil auch in Richtung des Navigationsziels 4 fortbewegen. Dies ist durch einen Pfeil mit einer durchgezogenen Linie und einem Pfeil mit einer gestrichelten Linie symbolisiert. So kann sich der Pfeil mit der durchgezogenen Linie zur Position des Pfeils mit der gestrichelten Linie fortbewegen. Mit Hilfe von Animationen kann die Person noch schneller und intuitiver erfassen, in welche Richtung sie sich zum Erreichen des Navigationsziels 4 fortbewegen muss.

Parkt die Person ihr Fahrzeug 2 jedoch nicht einfach "die Straße herunter", sondern musste gegebenenfalls in eine oder mehrere Querstraßen einfahren, um einen freien Parkplatz 11 zu finden, so reicht ein Navigationshinweis in Form eines simplen Pfeils nicht mehr aus, um der Person mitzuteilen wie sie das Navigationsziel 4 zu Fuß erreichen kann.

Mit Hilfe einer in Figur 3 dargestellten Kate 6 kann jedoch auch bei komplexen Parksituationen der Person ein Hinweis erteilt werden, wie sie das Navigationsziel 4 erreichen kann. Dabei zeigt die in Figur 3 dargestellte Karte 6 lediglich eine vergleichsweise kleinen Kartenausschnitt, welcher jedoch für die Person ausreichend ist, um zu erfassen welchen Weg 15 sie zum Erreichen des Navigationsziels 4 wählen muss. Die Karte 6 kann beliebig abstrahiert sein. Beispielsweise kann die Karte 6 lediglich Straßen 13, das Fahrzeug 2 sowie das Navigationsziel 4 umfassen. Auch können Straßennamen in Form von Text dargestellt sein.

Die Karte 6 kann jedoch auch zusätzliche Informationen umfassen, beispielsweise eine Information, dass der Weg 15 an zwei Stellen über die jeweilige Straße 13 führt. Dies ist durch zwei schraffierte Flächen 16 symbolisiert. Bei den schraffierten Flächen 16 kann es sich beispielsweise um den Bereich einer Ampel oder eines Fußgängerüberwegs handeln. Auch hier kann das Lichtmuster 1 Animationen aufweisen. So können beispielsweise die schraffierten Flächen 16 blinken und/oder sich die einzelnen Striche aus denen sich der Weg 15 zusammensetzt in Richtung des Navigationsziels 4 bewegen.

Auch kann eine Information dargestellt werden, wie weit das Navigationsziel 4 aktuell vom Fahrzeug 2 entfernt ist. Eine solche Angabe kann eine zeitliche Angabe wie beispielsweise "3 Minuten zu Fuß" und/oder eine Weglänge wie beispielsweise "500 Meter" umfassen. Ist die Person in Eile, so kann sie hierdurch abschätzen, ob sie einen Termin rechtzeitig noch wahrnehmen kann oder gegebenenfalls zu spät kommt.

Zur weiteren Verbesserung eines Komforts für die Person können beispielsweise auch Point of Interests (POI) in die Karte 6 eingezeichnet sein. Liegt beispielsweise ein Café auf dem Weg 15 zum Navigationsziel 4, so kann sich die Person dort noch einen Kaffee kaufen.

Dabei kann die Person bei der ursprünglichen Einprogrammierung der Navigationsroute in die Navigationseinrichtung 9 des Fahrzeugs 2 festlegen mit welchem Abstraktionslevel das Lichtmuster 1 den Navigationshinweis ausgeben soll. Hierdurch kann die Person ihren eignen Ansprüchen an die Darstellung von Navigationshinweisen nach dem Abstellen des Fahrzeugs 2 gerecht werden.
es sich beispielsweise um den Bereich einer Ampel oder eines Fußgängerüberwegs handeln. Auch hier kann das Lichtmuster 1 Animationen aufweisen. So können beispielsweise die schraffierten Flächen 16 blinken und/oder sich die einzelnen Striche aus denen sich der Weg 15 zusammensetzt in Richtung des Navigationsziels 4 bewegen.

Auch kann eine Information dargestellt werden, wie weit das Navigationsziel 4 aktuell vom Fahrzeug 2 entfernt ist. Eine solche Angabe kann eine zeitliche Angabe wie beispielsweise "3 Minuten zu Fuß" und/oder eine Weglänge wie beispielsweise "500 Meter" umfassen. Ist die Person in Eile, so kann sie hierdurch abschätzen, ob sie einen Termin rechtzeitig noch wahrnehmen kann oder gegebenenfalls zu spät kommt.

Zur weiteren Verbesserung eines Komforts für die Person können beispielsweise auch Point of Interests (POI) in die Karte 6 eingezeichnet sein. Liegt beispielsweise ein Café auf dem Weg 15 zum Navigationsziel 4, so kann sich die Person dort noch einen Kaffee kaufen.

Dabei kann die Person bei der ursprünglichen Einprogrammierung der Navigationsroute in die Navigationseinrichtung 9 des Fahrzeugs 2 festlegen mit welchem Abstraktionslevel das Lichtmuster 1 den Navigationshinweis ausgeben soll. Hierdurch kann die Person ihren eignen Ansprüchen an die Darstellung von Navigationshinweisen nach dem Abstellen des Fahrzeugs 2 gerecht werden.

## Patentansprüche

1. Verfahren zur Projektion wenigstens eines Lichtmusters (1) in eine Fahrzeugumgebung mit wenigstens einem von einem Fahrzeug (2) umfassten Projektor (3), wobei
das Lichtmuster (1) einen Navigationshinweis zur Navigationsfortführung in Form eines zum Erreichen eines Navigationsziels (4) zu wählenden Weg umfasst, um eine Person nach Abstellen des Fahrzeugs (2) in Richtung des Navigationsziels (4) zu weisen, und wobei
das Lichtmuster (1) gezielt gegenüber der Fahrzeugumgebung ausgerichtet wird, sodass das Lichtmuster (1) mit einer festgelegten Orientierung in die Fahrzeugumgebung projiziert wird,
**dadurch gekennzeichnet, dass**
wenigstens ein in einen Außenspiegel (7) integrierter Projektor (3) zur Projektion des Lichtmusters verwendet wird und ein Türöffnungswinkel einer Fahrzeugtür an die der Außenspiegel (7) angeschlossen ist, bei der gezielten Ausrichtung des Lichtmusters (1) gegenüber der Fahrzeugumgebung berücksichtigt wird.

2. Verfahren nach Anspruch 1,
**dadurch gekennzeichnet, dass**
mit dem Lichtmuster (1) Text, wenigstens ein Symbol (5) und/oder wenigstens eine Karte (6) in die Fahrzeugumgebung projiziert wird.

3. Verfahren nach Anspruch 1 oder 2,
**dadurch gekennzeichnet, dass**
das Lichtmuster (1) auf einen Untergrund projiziert wird.

4. Verfahren nach einem der Ansprüche 1 bis 3,
**dadurch gekennzeichnet, dass**
zumindest ein Teil eines Lichtmusters (1) animiert wird.

5. Verfahren nach einem der Ansprüche 1 bis 4,
**dadurch gekennzeichnet, dass**
der Türöffnungswinkel mittels eines Winkelsensors und/oder durch Auswertung von mit einer in den Außenspiegel (7) integrierten Kamera (8) erzeugten Kamerabildern erfasst wird.

6. Fahrzeug (2) mit wenigstens einem Projektor (3), einer Navigationseinrichtung (9) und einer Recheneinheit (10),
**dadurch gekennzeichnet, dass**
der Projektor (3), die Navigationseinrichtung (9) und die Recheneinheit (10) zur Durchführung eines Verfahrens nach einem der Ansprüche 1 bis 5 eingerichtet sind.

## Claims

1. Method for projecting at least one light pattern (1) into a vehicle environment using at least one projector (3) encompassed by a vehicle (2), wherein
the light pattern (1) has a navigation instruction for continuing navigation in the form of a route to be selected to reach a navigation destination (4) in order to point a person in the direction of the navigation destination (4) after parking the vehicle (2), and wherein
the light pattern (1) is specifically aligned with respect to the vehicle environment so that the light pattern (1) is projected into the vehicle environment at a fixed orientation,
**characterized in that**
at least one projector (3) integrated into an exterior mirror (7) is used to project the light pattern and a door opening angle of a vehicle door to which the exterior mirror (7) is connected is taken into account when specifically aligning the light pattern (1) with respect to the vehicle environment.

2. Method according to claim 1,
**characterized in that**
text, at least one symbol (5) and/or at least one map (6) is projected into the vehicle environment by the light pattern (1).

3. Method according to claim 1 or claim 2,
**characterized in that**
the light pattern (1) is projected onto a background.

4. Method according to any of claims 1 to 3,
**characterized in that**
at least part of a light pattern (1) is animated.

5. Method according to any of claims 1 to 4,
**characterized in that**
the door opening angle is detected by means of an angle sensor and/or by evaluating camera images generated by a camera (8) integrated into the exterior mirror (7).

6. Vehicle (2) comprising at least one projector (3), a navigation unit (9) and a computing unit (10),
**characterized in that**
the projector (3), the navigation unit (9) and the computing unit (10) are configured to carry out a method according to any of claims 1 to 5.

## Revendications

1. Procédé pour la projection d'au moins un motif lumineux (1) dans un environnement de véhicule comportant au moins un projecteur (3) entouré d'un véhicule (2), dans lequel
le motif lumineux (1) comprend une indication de navigation pour le guidage de la navigation sous la forme d'un chemin à choisir pour atteindre une destination de navigation (4) afin d'orienter une personne en direction de la destination de navigation (4) après l'arrêt du véhicule (2), et dans lequel
le motif lumineux (1) est orienté de manière ciblée par rapport à l'environnement de véhicule, de sorte que le motif lumineux (1) est projeté dans l'environnement de véhicule avec une orientation définie,
**caractérisé en ce que**
au moins un projecteur (3) intégré dans un rétroviseur extérieur (7) est utilisé pour la projection du motif lumineux et
un angle d'ouverture de porte d'une porte de véhicule à laquelle est raccordé le rétroviseur extérieur (7) est pris en compte lors de l'orientation ciblée du motif lumineux (1) par rapport à l'environnement de véhicule.

2. Procédé selon la revendication 1,
**caractérisé en ce que**
un texte, au moins un symbole (5) et/ou au moins une carte (6) sont projetés dans l'environnement du véhicule avec le motif lumineux (1).

3. Procédé selon la revendication 1 ou 2,
**caractérisé en ce que**
le motif lumineux (1) est projeté sur un sol.

4. Procédé selon l'une des revendications 1 à 3,
**caractérisé en ce que**
au moins une partie d'un motif lumineux (1) est animée.

5. Procédé selon l'une des revendications 1 à 4,
**caractérisé en ce que**
l'angle d'ouverture de porte est détecté au moyen d'un capteur d'angle et/ou par l'évaluation d'images de caméra générées par une caméra (8) intégrée dans le rétroviseur extérieur (7).

6. Véhicule (2) comportant au moins un projecteur (3), un dispositif de navigation (9) et une unité de calcul (10),
**caractérisé en ce que**
le projecteur (3), le dispositif de navigation (9) et l'unité de calcul (10) sont configurés pour la mise en œuvre d'un procédé selon l'une des revendications 1 à 5.
